# EUROPEAN PATENT APPLICATION

(11) **EP 1 411 514 A2**
(43) Date of publication of application: **21.04.2004**
(21) Application number: 03023803.4
(22) Date of filing: 17.10.2003
(51) Int. Cl.: G11B 20/00

(54) **Format conversion apparatus and method, information recording/reproduction apparatus and method, and information reproduction apparatus and method**

(30) Priority: 18.10.2002 JP 2002304789
(71) Applicant: MATSUSHITA ELECTRIC INDUSTRIAL CO., LTD., Kadoma-shi, Osaka 571-8501 (JP)
(72) Inventor: Shimbo, Masatoshi, Kawanishi-shi Hyogo 666-0152 (JP); Horii, Noriaki, Osaka-shi Osaka 532-0022 (JP)
(74) Representative: Balsters, Robert

(57) **Abstract**

A format conversion apparatus is provided for converting a format of an information recording medium, comprising a section for reproducing coded encrypted title key information E'(Kti) stored on the information recording medium to generate encrypted title key information E(Kti), a section for encrypting the encrypted title key information E(Kti) using a random number MMi. to generate doubly-encrypted title key information E²(Kti); a section for encrypting the random number MMi using a second encryption key to generate an encrypted random number E(MMi), a section for recording the doubly-encrypted title key information E²(Kti) onto the information recording medium as coded doubly-encrypted title key information E²' (Kti); and a section for recording the encryptedrandomnumber E(MMi) onto the information recording medium as coded encrypted random number E'(MMi).

## Description

### BACKGROUND OF THE INVENTION

### 1. FIELD OF THE INVENTION:

The present invention relates to a format conversion apparatus for converting the format of an information recording medium and an information recording/reproduction apparatus comprising the format conversion apparatus, and a format conversion method for converting the format of an information recording medium and an information recording/reproduction method comprising the format conversion method, and an information reproduction apparatus and an information reproduction method.

### 2. DESCRIPTION OF THE RELATED ART:

To prevent illegal access or copy of data stored on information recording media, the secrecy of the data may be secured or the cryptography of data is performed, for example.

For example, information of a key (key information) is recorded in a particular sector in a specific modulation scheme. The key information is used to accurately decrypt data encrypted in other sectors. Therefore, only when the key information can be decrypted, encrypted data stored in other sectors can be accurately decrypted (see, for example, Japanese Laid-Open Publication No. 11-238305).

Recently, content data may be transferred from a particular medium (source) to a destination medium by a data transfer method called "move". In a move operation, after content data is transferred from a particular medium (source) to a destination medium, the content data is deleted from the source medium. The move function is different from a typical copy function in which content data is not deleted from the source medium. Therefore, content data can be transferred from a source medium to a destination medium without duplication of content data.

The move system is constructed such that only move-compliant information recording/reproduction apparatuses can reproduce data recorded in a move-compliant format information recording medium. With this system, illegal data transfer can be prevented.

In this situation, move-compliant information recording/reproduction apparatuses and non-move-compliant information recording/reproduction apparatuses coexist on the market. Also, move-compliant format information recording media and non-move-compliant format information recording media coexist.

Non-move-compliant information recording/reproduction apparatuses cannot reproduce data recorded in move-compliant format information recording media. Move-compliant information recording/reproduction apparatuses cannot reproduce data recorded in non-move-compliant format information recording media. This is not the case if move-compliant information recording/reproduction apparatuses have a function of reproducing data from non-move-compliant format information recording media. Note that this is not the case when a move-compliant information recording/reproduction apparatus has a function of reproducing non-move-compliant information recording media.

### SUMMARY OF THE INVENTION

According to an aspect of the present invention, a format conversion apparatus is provided for converting a format of an information recording medium, wherein the information recording medium stores coded encrypted title key information E' (Kti) , wherein the coded encrypted title key information E'(Kti) has been obtained by encrypting title key information Kti using a first encryption key and recording the encrypted title key information E(Kti) onto the information recording medium in a first error correction code encoding scheme and a first modulation scheme. The format conversion apparatus comprises: a section for reproducing the coded encrypted title key informat ion E'(Kti) stored on the information recording medium in a first demodulation scheme and a first error correction decoding scheme corresponding to the first modulation scheme and the first error correction code encoding scheme to generate the encrypted title key information E(Kti); a section for encrypting the encrypted title key information E(Kti) using a random number MMi to generate doubly-encrypted title key information E²(Kti); a section for encrypting the random number MMi using a second encryption key to generate an encrypted random number E(MMi); a section for recording the doubly-encrypted title key information E²(Kti) onto the information recording medium in the first error correction code encoding scheme and the first modulation scheme as coded doubly-encrypted title key information E²'(Kti); and a section for recording the encrypted random number E(MMi) onto the information recording medium in a second error correction code encoding scheme and a second modulation scheme different from the first error correction code encoding scheme and the first modulation scheme, respectively, as coded encrypted random number E'(MMi).

According to another aspect of the present invention, a format conversion apparatus is provided for converting a format of an information recording medium, wherein the information recording medium stores coded doubly-encrypted title key information E²'(Kti) and coded encrypted random number E'(MMi), wherein the coded doubly-encrypted title key information E²'(Kti) has been obtained by encrypting encrypted title key information E(Kti) using a random number MMi and recording the doubly-encrypted title key information E²(Kti) onto the information recording medium in a first error correction code encoding scheme and a first modulation scheme; and the coded encrypted random number E'(MMi) has been obtained by encrypting the random number MMi using a second encryption key and recording the encrypted random number E(MMi) onto the information recording medium in a second error correction code encoding scheme and a second modulation scheme different from the first error correction code encoding scheme and the first modulation scheme, respectively. The format conversion apparatus comprises: a section for reproducing the coded doubly-encrypted title key information E²'(Kti) stored on the information recording medium in a first demodulation scheme and a first error correction decoding scheme corresponding to the first modulation scheme and the first error correction code encoding scheme, respectively, as the doubly-encrypted title key information E²(Kti); a section for reproducing the coded encrypted random number E'(MMi) stored on the information recording medium in a second demodulation scheme and a second error correction code decoding scheme corresponding to the second modulation scheme and the second error correction code encoding scheme to generate the encrypted random number E(MMi); a section for decrypting the encrypted random number E(MMi) using a second encryption key to generate a random number MMi; a section for decrypting the doubly-encrypted title key information E²(Kti) using the random number MMi to generate the encrypted title key information E(Kti); and a section for recording the encrypted title key information E(Kti) onto the information recording medium in the first error correction code encoding scheme and the first modulation scheme as the coded encrypted title key information E'(Kti).

In one embodiment of this invention, the format conversion apparatus further comprises: a section for decrypting the encrypted title key information E(Kti) generated by the section for generating the encrypted title key information E(Kti) using the first encryption key to generate the title key information Kti; and a section for encrypting the title key information Kti using the first encryption key to generate the encrypted title key information E(Kti).

In one embodiment of this invention, after the doubly-encrypted title key information E²(Kti) and the encrypted random number E (MMi) are generated and are recorded onto the information recording medium, the coded encrypted title key information E' (Kti) is deleted from the information recording medium.

In one embodiment of this invention, after the encrypted title key information E(Kti) is generated and is recorded onto the information recording medium, the coded doubly-encrypted title key information E²'(Kti) and the coded encrypted random number E'(MMi) are deleted from the information recording medium.

In one embodiment of this invention, after the encrypted title key information E(Kti) is generated and is recorded onto the information recording medium, the coded encrypted random number E'(MMi) is deleted from the information recording medium.

In one embodiment of this invention, the title key information Kti includes permission/prohibition information indicating whether a move operation of the content stored on the information recording medium is permitted or not .

In one embodiment of this invention, the title key information Kti includes permission/prohibition information indicating whether or not a move operation is permitted for a content stored on the information recording medium; and the format conversion apparatus further comprises a section for rewriting the permission/prohibition information to indicate move prohibition.

According to another aspect of the present invention, an information recording/reproduction apparatus is provided for recording a content onto an information recording medium and reproducing the content stored on an information recording medium, comprising: a section for encrypting title key information Kti using a first encryption key to generate encrypted title key information E(Kti); a section for encrypting the content using the title key information Kti to generate an encrypted content E(Content); a section for recording the encrypted title key information E(Kti) and the encrypted content E(Content) onto the information recording medium in a first error correction code encoding scheme and a first modulation scheme as coded encrypted title key information E'(Kti) and coded encrypted content E'(Content); a section for reproducing the coded encrypted title key information E'(Kti) and the coded encrypted content E'(Content) stored on the information recording medium in a first demodulation scheme and a first error correction decoding scheme corresponding to the first modulation scheme and the first error correction code encoding scheme to generate the encrypted title key information E(Kti) and the encrypted content E(Content); a section for decrypting the encrypted title key information E(Kti) using the first encryption key to generate the title key information Kti; a section for decrypting the encrypted content E(Content) using the title key information Kti to generate the content; a section for encrypting the encrypted title key information E ( Kti ) using a random number MMi to generate doubly-encrypted title key information E²(Kti); a section for encrypting the random number MMi using a second encryption key to generate an encrypted random number E(MMi); a section for recording the doubly-encrypted title key information E²(Kti) onto the information recording medium in a first error correction code encoding scheme and a first modulation scheme as coded doubly-encrypted title key information E²'(Kti); and a section for recording the encrypted random number E(MMi) onto the information recording medium in a second error correction code encoding scheme and a second modulation scheme different from the first error correction code encodingscheme and thefirst modulationscheme,respectively, as coded encrypted random number E'(MMi).

According to another aspect of the present invention, an information recording/reproduction apparatus is provided for recording a content onto an information recording medium and reproducing the content stored on the information recording medium, comprising: a section for encrypting title key information Kti using a first encryption key to generate encrypted title key information E(Kti); a section for encrypting the encrypted title key information E(Kti) using a random number MMi to generate doubly-encrypted title key information E²(Kti); a section for encrypting the content using the title key information Kti to generate an encrypted content E(Content); a section for encrypting the random number MMi using a second encryption key to generate encrypted random number E(MMi); a section for recording the doubly-encrypted title key information E²(Kti) and the encrypted content E(Content) onto the information recording medium in a first error correction code encoding scheme and a first modulation scheme as coded doubly-encrypted title key information E²'(Kti) and coded encrypted content E'(Content); a section for recording the encrypted random number E(MMi) onto the information recording medium in a second error correction code encoding scheme and a second modulation scheme different from the first error correction code encoding scheme and the first modulation scheme, respectively, as coded encrypted random number E'(MMi); a section for reproducing the coded doubly-encrypted title key information E²'(Kti) and the coded encrypted content E'(Content) stored on the information recording medium in a first demodulation scheme and a first error correction decoding scheme corresponding to the first modulation scheme and the first error correction code encoding scheme, respectively, to generate the doubly-encrypted title key information E²(Kti) and the encrypted content E(Content); a section for reproducing the coded encrypted random number E'(MMi) stored on the inf ormation recording medium in a second demodulation scheme and a second error correction code decoding scheme corresponding the second modulation scheme and the second error correction code encoding scheme, respectively, to generate the encrypted random number E(MMi); a section for decrypting the encrypted random number E(MMi) using the second encryption key to generate the random number MMi; a section for decrypting the doubly-encrypted title key information E²(Kti) using the random number MMi to generate the encrypted title key information E(Kti); a section for decrypting the encrypted title key information E(Kti) using the first encryption key to generate the title key information Kti; a section for decrypting the encrypted content E(Content) using the title key information Kti to generate the content; and a section for recording the encrypted title key information E(Kti) onto the information recording medium in the first error correction code encoding scheme and the first modulation scheme as the coded encrypted title key information E'(Kti).

In one embodiment of this invention, the information recording/reproduction apparatus further comprises: a section for decrypting the encrypted title key information E(Kti) generated by the section for generating the encrypted title key information E(Kti) using the first encryption key to generate the title key information Kti; and a section for encrypting the title key information Kti using the first encryption key to generate the encrypted title key information E(Kti).

According to another aspect of the present invention, an information reproduction apparatus is provided for reproducing a content stored on an information recording medium, wherein the information recording medium stores coded encrypted title key information E'(Kti), coded doubly-encrypted title key information E²'(Kti), a coded encrypted random number E'(MMi), and a coded encrypted content E'(Content), wherein the coded encrypted title key information E'(Kti) stored on the information recording medium has been obtained by encrypting title key information Kti using a first encryption key to generate the encrypted title key information E(Kti) and recording the encrypted title key information E(Kti) onto the information recording medium in a first error correction code encoding scheme and a first modulation scheme, wherein the coded doubly-encrypted title key information E²'(Kti) stored on the information recording medium has been obtained by encrypting the encrypted title key information E(Kti) using a random number MMi to generate the doubly-encrypted title key information E²(Kti) and recording the doubly-encrypted title key information E²(Kti) onto the information recording medium in the first error correction code encoding scheme and the first modulation scheme, wherein the coded encrypted random number E'(MMi) stored on the information recording medium has been obtained by encrypting the random number MMi using a second encryption key to generate the encrypted random number E(MMi) and recording the encrypted random number E(MMi) onto the information recording medium in a second error correction code encoding scheme and a second modulation scheme different from the first error correction code encoding scheme and the first modulation scheme, wherein the coded encrypted content E'(Content) stored on the information recording medium has been obtained by encrypting the content using the title key information Kti to generate the encrypted content E (Content) and recording the encrypted content E(Content) onto the information recording medium in the first error correction code encoding scheme and the first modulation scheme. The information reproduction apparatus comprises: a section for reproducing the coded doubly-encrypted title key information E²'(Kti), the coded encrypted title key information E'(Kti), and the coded encrypted content E'(Content) stored on the information recording medium in a first demodulation scheme and a first error correction decoding scheme corresponding to the first modulation scheme and the first error correction code encoding scheme, respectively;
a section for reproducing the coded encrypted random number E'(MMi) stored on the information recording medium in a second demodulation scheme and a second error correction code decoding scheme corresponding to the second modulation scheme and the second error correction code encoding scheme, respectively;
a section for decrypting the encrypted random number E(MMi) using the second encryption key to generate the random number MMi;
a section for decrypting the doubly-encrypted title key information E²(Kti) using the random number MMi to generate the encrypted title key information E(Kti);
a section for decrypting the encrypted title key information E(Kti) using the first encryption key to generate the title key information Kti; and
a section for decrypting the encrypted content E(Content) using the title key information Kti to generate the content.
13. A format conversion method for converting a format of an information recording medium, wherein the information recording medium stores coded encrypted title key information E' (Kti) , wherein the coded encrypted title key information E'(Kti) has been obtained by encrypting title key information Kti using a first encryption key and recording the encrypted title key information E(Kti) onto the information recording medium in a first error correction code encoding scheme and a first modulation scheme. The format conversion method comprises the steps of: (a) reproducing the coded encrypted title key information E'(Kti) stored on the information recording medium in a first demodulation scheme and a first error correction decoding scheme corresponding to the first modulation scheme and the first error correction code encoding scheme to generate the encrypted title key information E(Kti); (b) encrypting the encrypted title key information E(Kti) using a random number MMi to generate doubly-encrypted title key information E²(Kti); (c) encrypting the random number MMi using a second encryption key to generate an encrypted random number E(MMi); (d) recording the doubly-encrypted title key information E²(Kti) onto the information recording medium in the first error correction code encoding scheme and the first modulation scheme as coded doubly-encrypted title key information E²'(Kti); and (e) recording the encrypted random number E(MMi) onto the information recording medium in a second error correction code encoding scheme and a second modulation scheme different from the first error correction code encoding scheme and the first modulation scheme, respectively, as coded encrypted random number E'(MMi).

According to another aspect of the present invention, a format conversion method is provided for converting a format of an information recording medium, wherein the information recording medium stores coded doubly-encrypted title key information E²'(Kti) and coded encrypted random number E'(MMi), wherein the coded doubly-encrypted title key information E²'(Kti) has been obtained by encrypting encrypted title key information E(Kti) using a random number MMi and recording the doubly-encrypted title key information E²(Kti) onto the information recording medium in a first error correction code encoding scheme and a first modulation scheme; and the coded encrypted random number E'(MMi) has been obtained by encrypting the random number MMi using a second encryption key and recording the encrypted random number E(MMi) onto the information recording medium in a second error correction code encoding scheme and a second modulation scheme different from the first error correction code encoding scheme and the first modulation scheme, respectively. The format conversion method comprises the steps of: (a) reproducing the coded doubly-encrypted title key information E²'(Kti) stored on the information recording medium in a first demodulation scheme and a first error correction decoding scheme corresponding to the first modulation scheme and the first error correction code encodingscheme,respectively,asthe doubly-encryptedtitle key information E²(Kti); (b) reproducing the coded encrypted random number E'(MMi) stored on the information recording medium in a second demodulation scheme and a second error correction code decoding scheme corresponding to the second modulation scheme and the second error correction code encoding scheme to generate the encrypted random number E(MMi); (c) decrypting the encrypted random number E(MMi) using a second encryption key to generate a random number MMi; (d) decrypting the doubly-encrypted title key information E²(Kti) using the random number MMi to generate the encrypted title key information E(Kti); and (e) recording the encrypted title key information E(Kti) onto the information recording medium in the first error correction code encoding scheme and the first modulation scheme as the coded encrypted title key information E'(Kti).

In one embodiment of this invention, the format conversion method further comprises: decrypting the encrypted title key information E(Kti) generated by the step of generating the encrypted title key information E(Kti) using the first encryption key to generate the title key information Kti; and encrypting the title key information Kti using the first encryption key to generate the encrypted title key information E(Kti).

According to another aspect of the present invention, an information recording/reproduction method is provided for recording a content onto an information recording medium and reproducing the content stored on an information recording medium, comprising the steps of : (a) encrypting title key information Kti using a first encryption key to generate encrypted title key information E(Kti); (b) encrypting the content using the title key information Kti to generate an encrypted content E(Content); (c) recording the encrypted title key information E(Kti) and the encrypted content E(Content) onto the information recording medium in a first error correction code encoding scheme and a first modulation scheme as coded encrypted title key information E'(Kti) and coded encrypted content E'(Content); (d) reproducing the coded encrypted title key information E'(Kti) and the coded encrypted content E'(Content) stored on the information recording medium in a first demodulation scheme and a first error correction decoding scheme corresponding to the first modulation scheme and the first error correction code encoding scheme to generate the encrypted title key information E(Kti) and the encrypted content E(Content); (e) decrypting the encrypted title key information E(Kti) using the first encryption key to generate the title key information Kti; (f) decrypting the encrypted content E(Content) using the title key information Kti to generate the content; (g) encrypting the encrypted title key information E(Kti) using a random number MMi to generate doubly-encrypted title key information E²(Kti); (h) encrypting the random number MMi using a second encryption key to generate an encrypted random number E(MMi); (i) recording the doubly-encrypted title key information E²(Kti) onto the information recording medium in a first error correction code encoding scheme and a first modulation scheme as coded doubly-encrypted title key information E²'(Kti); and (j) recording the encrypted random number E(MMi) onto the information recording medium in a second error correction code encoding scheme and a second modulation scheme different from the first error correction code encoding scheme and the first modulation scheme, respectively, as coded encrypted random number E'(MMi).

According to another aspect of the present invention, an information recording/reproduction method is provided for recording a content onto an information recording medium and reproducing the content stored on the information recording medium, comprising the steps of: (a) encrypting title key information Kti using a first encryption key to generate encrypted title key information E(Kti); (b) encrypting the encrypted title key information E(Kti) using a random number MMi to generate doubly-encrypted title key information E²(Kti); (c) encrypting the content using the title key information Kti to generate an encrypted content E(Content); (d) encrypting the random number MMi using a second encryption key to generate encrypted random number E(MMi); (e) recording the doubly-encrypted title key inf ormation E²(Kti) and the encrypted content E(Content) onto the information recording medium in a first error correction code encoding scheme and a first modulation scheme as coded doubly-encrypted title key information E²'(Kti) and coded encrypted content E' (Content); (f) recording the encrypted random number E(MMi) onto the information recording medium in a second error correction code encoding scheme and a second modulation scheme different from the first error correction code encoding scheme and the first modulation scheme, respectively, as coded encrypted random number E'(MMi); (g) reproducing the coded doubly-encrypted title key information E²'(Kti) and the coded encrypted content E'(Content) stored on the information recording medium in a first demodulation scheme and a first error correction decoding scheme corresponding to the first modulation scheme and the first error correction code encoding scheme, respectively, as the doubly-encrypted title key information E²(Kti) and the encrypted content E(Content); (h) reproducing the coded encrypted random number E'(MMi) stored on the information recording medium in a second demodulation scheme and a second error correction code decoding scheme corresponding the second modulation scheme and the second error correction code encoding scheme, respectively, to generate the encrypted random number E(MMi); (i) decrypting the encrypted random number E(MMi) using the second encryption key to generate the random number MMi; (j) decrypting the doubly-encrypted title key information E²(Kti) using the random number MMi to generate the encrypted title key information E(Kti); (k) decrypting the encrypted title key information E(Kti) using the first encryption key to generate the title key information Kti; (1) decrypting the encrypted content E(Content) using the title key information Kti to generate the content; and (m) recording the encrypted title key information E(Kti) onto the information recording medium in the first error correction code encoding scheme and the first modulation scheme as the coded encrypted title key information E'(Kti).

In one embodiment of this invention, the information recording/reproduction method further comprises: decrypting the encrypted title key information E(Kti) generated by the step of generating the encrypted title key information E(Kti) using the first encryption key to generate the title key information Kti; and encrypting the title key information Kti using the first encryption key to generate the encrypted title key information E(Kti).

According to another aspect of the present invention, an information reproduction method is provided for reproducing a content stored on an information recording medium, wherein the information recording medium stores coded encrypted title key information E'(Kti), coded doubly-encrypted title key information E²'(Kti), a coded encrypted random number E'(MMi), and a coded encrypted content E'(Content), wherein the coded encrypted title key information E'(Kti) stored on the information recording medium has been obtained by encrypting title key information Kti using a first encryption key to generate the encrypted title key information E(Kti) and recording the encrypted title key information E(Kti) onto the information recording medium in a first error correction code encoding scheme and afirst modulationscheme,whereinthe coded doubly-encrypted title key information E²'(Kti) stored on the information recording medium has been obtained by encrypting the encrypted title key information E(Kti) using a random number MMi to generate the doubly-encrypted title key information E²(Kti) and recording the doubly-encrypted title key information E²(Kti) onto the information recording medium in the first error correction code encoding scheme and the first modulation scheme, wherein the coded encrypted random number E'(MMi) stored on the information recording medium has been obtained by encrypting the random number MMi using a second encryption key to generate the encrypted random number E(MMi) and recording the encrypted random number E(MMi) onto the information recording medium in a second error correction code encoding scheme and a second modulation scheme different from the first error correction code encoding scheme and the first modulation scheme, wherein the coded encrypted content E'(Content) stored on the information recording medium has been obtained by encrypting the content using the title key information Kti to generate the encrypted content E (Content) and recording the encrypted content E(Content) onto the information recording medium in the first error correction code encoding scheme and the first modulation scheme. The information reproduction method comprises the steps of: (a) reproducing the coded doubly-encrypted title key information E²'(Kti), the coded encrypted title key information E'(Kti), and the coded encrypted content E'(Content) stored on the information recording medium in a first demodulation scheme and a first error correction decoding scheme corresponding to the first modulation scheme and the first error correction code encoding scheme, respectively, as the doubly-encrypted title key information E²(Kti), the encrypted title key information E(Kti), and the coded encrypted content E(Content); (b) reproducing the coded encrypted random number E'(MMi) stored on the information recording medium in a second demodulation scheme and a second error correction code decoding scheme corresponding to the second modulation scheme and the second error correction code encoding scheme, respectively, as the encrypted random number E(MMi); (c) decrypting the encrypted random number E(MMi) using the second encryption key to generate the random number MMi; (d) decrypting the doubly-encrypted title key information E²(Kti) using the random number MMi to generate the encrypted title key information E(Kti); (e) decrypting the encrypted title key information E(Kti) using the first encryption key to generate the title key information Kti; and ( f ) decrypting the encrypted content E(Content) using the title key information Kti to generate the content.

Thus, the invention described herein makes possible the advantages of (1) providing an apparatus and method for converting non-move-compliant format information recording media to move-compliant format information recording media, and an apparatus and method for converting move-compliant format information recording media to non-move-compliant format information recording media, (2) an information recording/reproduction apparatus and method for reproducing information indicating that the format of an information recording medium is a move-compliant format and converting the information to information indicating that the format of the information recording medium is a non-move-compliant format, and recording data onto the information recording medium, and (3) an information reproduction apparatus and an information reproduction method.

These and other advantages of the present invention will become apparent to those skilled in the art upon reading and understanding the following detailed description with reference to the accompanying figures.

### BRIEF DESCRIPTION OF THE DRAWINGS

Figure **1** is a diagram showing a configuration of an information recording/reproduction apparatus according to Embodiment 1 of the present invention.
Figure **2** is a flowchart showing a procedure of recording a content onto an information recording medium using the information recording/reproduction apparatus of Figure **1**.
Figure **3** is a flowchart showing a procedure of reproducing an encrypted content from an information recording medium using the information recording/reproduction apparatus of Figure **1**.
Figure **4** is a flowchart showing a procedure of converting the format of an information recording medium from a non-move-compliant format to a move-compliant format using the information recording/reproduction apparatus of Figure **1**.
Figure **5** shows a configuration of an information recording/reproduction apparatus according to Embodiment 2 of the present invention.
Figure **6** is a flowchart showing a procedure of recording a content onto an information recording medium using the information recording/reproduction apparatus of Figure **5**.
Figure **7** is a flowchart showing a procedure of reproducing an encrypted content from an information recording medium using the information recording/reproduction apparatus of Figure **5**.
Figure **8** is a flowchart showing a procedure of converting the format of an information recording medium from a move-compliant format to a non-move-compliant format using the information recording/reproduction apparatus of Figure **5**.
Figure **9** shows a configuration of an information recording/reproduction apparatus according to another example of Embodiment 2 of the present invention.
Figure **10** shows a configuration of an information reproduction apparatus according to Embodiment 3 of the present invention.
Figure **11** is a flowchart showing a procedure of reproducing an encrypted content from an information recording medium using the information reproduction apparatus of Figure **10**.

### DESCRIPTION OF THE PREFERRED EMBODIMENTS

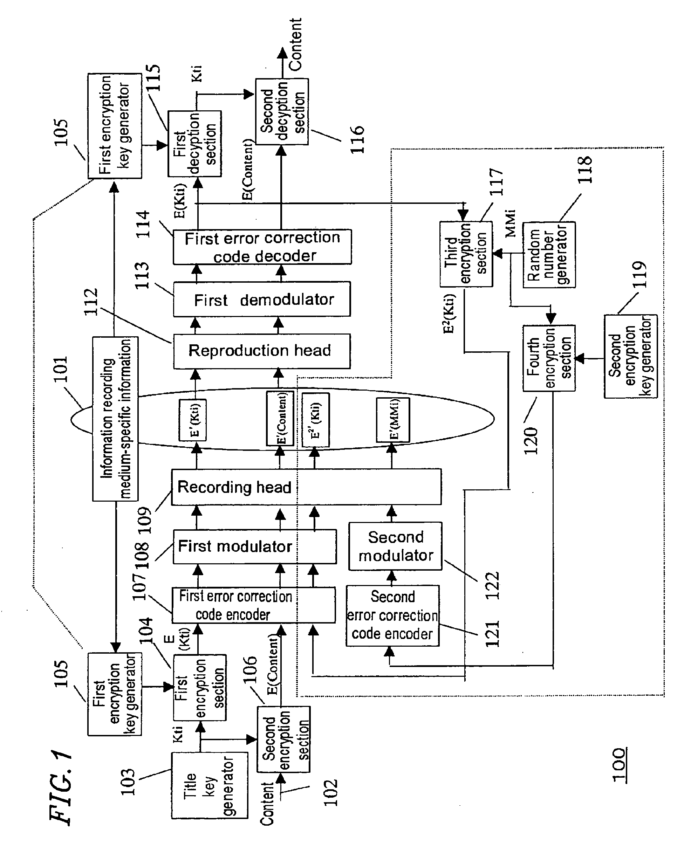

Figure **1** shows a configuration of an information recording/reproduction apparatus **100** according to Embodiment 1 of the present invention.

The information recording/reproduction apparatus **100** comprises a content input terminal **102** via which a content is input thereinto, a title key generator **103** for generating title keys, a first encryption section **104** and a second encryption section **106** for encrypting input data, and a first encryption key generator **105** for generating a first encryption key.

The information recording/reproduction apparatus **100** further comprises a first error correction code encoder **107**, a first modulator **108**, and a recording head **109**. The first error correction code encoder **107**, the first modulator **108** and the recording head **109** are used to record the input data onto an information recording medium **101** in a first error correction code encoding scheme and a first modulation scheme.

In the information recording/reproduction apparatus **100**, the content input terminal **102**, the title key generator **103**, the first encryption section **104**, the first encryption key generator **105**, the second encryption section **106**, the first error correction code encoder **107**, the first modulator **108**, and the recording head **109** are used to encrypt a content externally input to the information recording/reproduction apparatus **100** and record the encrypted content onto the information recording medium **101**.

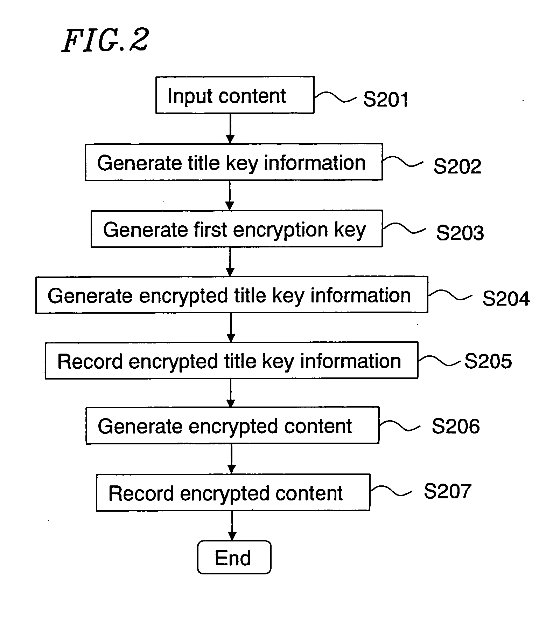

Figure **2** is a flowchart showing a procedure of recording a content onto the information recording medium **101** using the information recording/reproduction apparatus **100**.

Hereinafter, a procedure of recording a content onto the information recording medium **101** is described step by step with reference to Figure **2.** Note that the information recording medium **101** has an information recording medium-specific information for identifying the information recording medium **101**.

In step S201: a content is input into the information recording/reproduction apparatus **100** via the content input terminal **102**. An example of a content includes, but is not limited to, a digital music signal.

In step S202: the title key generator **103** generates title key information Kti and outputs it to the first encryption section **104** and the second encryption section **106**. The title key information Kti includes a title key and its accompanying information. The title key includes information relating to the title of a content. The information accompanying the title key includes copy permission/prohibition information indicating whether copy is permitted or not, move permission/prohibition information indicating whether move is permitted or not, and the like. The "move" operation is defined in SDMI PD Specification Part1 Version 1.0. To prohibit a move operation, the move permission/prohibition information is set to "Prohibited" to indicate that a move operation is not permitted (move is prohibited).

After the title key information Kti is output to the first encryption section **104** and the second encryption section **106**, the process goes to step S203.

In step S203: the first encryption key generator **105** generates a first encryption key based on the information recording medium-specific information stored on the information recording medium **101** and outputs it to the first encryption section **104** . Thereafter, the process goes to step S204.

In step S204: the first encryption section **104** encrypts the title key information Kti using the first encryption key to generate encrypted title key information E(Kti); and the encrypted title key information E(Kti) is output to the first error correction code encoder **107**. Thereafter, the process goes to step S205.

In step S205: the encrypted title key information E (Kti) is recorded via the f irst error correction code encoder **107** and the first modulator **108** onto the information recording medium **101** in the first error correction code encoding scheme and the first modulation scheme. In this case, the encrypted title key information E(Kti) is stored as coded encrypted title key information E' (Kti) on the information recording medium **101**. The recording of data onto the information recording medium **101** is carried out using the recording head **109**.

In step S206: the second encryption section **106** encrypts a content based on the title key information Kti to generate the encrypted content E(Content). The encrypted content E(Content) is output to the first error correction code encoder **107 .** Thereafter, the process goes to step S207.

In step S207: the encrypted content E(Content) is recorded via the first error correction code encoder **107** and the first modulator **108** onto the information recording medium **101** in the first error correction code encoding scheme and the first modulation scheme . In this case, the encrypted content E(Content) is stored as coded encrypted content E'(Content) on the information recording medium **101**. The recording of data onto the information recording medium **101** is carried out using the recording head **109**.

Referring back to Figure **1**, the configuration of the information recording apparatus **100** will be described.

The information recording/reproduction apparatus **100** further comprises a reproduction head **112**, a first demodulator **113**, and a first error correction code decoder **114**. The reproduction head **112**, the first demodulator **113**, and the first error correction code decoder **114** are used to reproduce data stored on the information recording medium **101** in a first demodulation scheme anda first error correction decoding scheme.

The information recording/reproduction apparatus **100** further comprises a first decryption section **115** and a second decryption section **116** for decrypting input data.

In the information recording/reproduction apparatus **100** , the reproduction head **112 ,** the first demodulator **113**, the first error correction code decoder **114,** the first decryption section **115**, and the second decryption section **116** are used to decrypt an encrypted content stored on the information recording medium **101**.

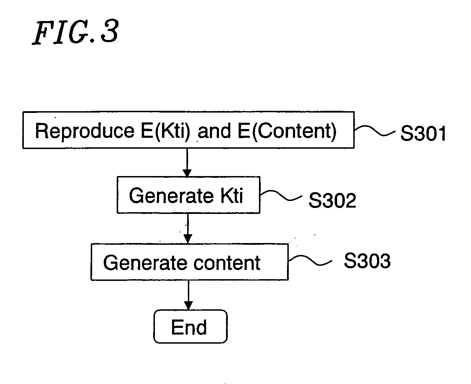

Figure **3** is a flowchart showing a procedure of reproducing an encrypted content from the information recording medium **101** using the information recording/reproduction apparatus **100**.

Hereafter, a procedure of reproducing an encrypted content from the information recording medium **101** will be described step by step with reference to Figure **3** . Note that the information recording medium **101** stores coded encrypted title key information E'(Kti) and an coded encrypted content E'(Content).

In step S301: the coded encrypted title key information E'(Kti) and the coded encrypted content E' (Content) stored on the information recording medium **101** are reproduced via the first demodulator **113** and the first error correction code decoder **114** in the first demodulation scheme and the first error correction decoding scheme. The first demodulation scheme and the first error correction decoding scheme correspond to the first modulation scheme and the first error correction code encoding scheme, respectively. The reproduction of data from the information recording medium **101** is carried out using the reproduction head **112**. The encrypted title key information E(Kti) is output to the first decryption section **115**. The encrypted content E (Content) is output to the second decryption section **116**.

In step S302: the first decryption section **115** decrypts the encrypted title key information E(Kti) using the first encryption key to generate the title key information Kti; and the title key information Kti is output to the second decryption section **116** . Thereafter, the process goes to step S303.

In step S303: the second decryption section **116** decrypts the encrypted content E(Content) using the title key information Kti to generate the content.

Referring back to Figure **1**, the configuration of the information recording apparatus **100** will be described.

The information recording/reproduction apparatus **100** further comprises a third encryption section **117** and a fourth encryption section **120** for encrypting input data, a random number generator **118** for generating random numbers, and a second encryption key generator **119** for generating a second encryption key.

The information recording/reproduction apparatus **100** further comprises a second error correction code encoder **121** and a second modulator **122**. The second error correction code encoder **121**, the second modulator **122** and the recording head **109** are used to record the input data onto the information recording medium **101** in a second error correction code encoding scheme and a second modulation scheme.

In the information recording/reproduction apparatus **100**, the third encryption section **117**, the fourth encryption section **120**, the random number generator **118**, the second encryption key generator **119**, the second error correction code encoder **121**, and the second modulator **122** are used to generate coded doubly encrypted title key information E²'(Kti) and a coded encrypted random number E' (MMi) based on the encrypted title key information E(Kti) reproduced from the information recording medium **101**, the random number and the second encryption key and to record E²'(Kti) and E'(MMi) onto the information recording medium **101.**

By generating the coded doubly encrypted title key information E²'(Kti) and the coded encrypted random number E' (MMi) based on the encrypted title key inf ormation E(Kti) reproduced from the information recording medium **101,** the random number and the second encryption key and recording E²'(Kti) and E'(MMi) onto the information recording medium **101**, the information recording/reproduction apparatus **100** converts the format of the information recording medium **101** from a non-move-compliant format to a move-compliant format.

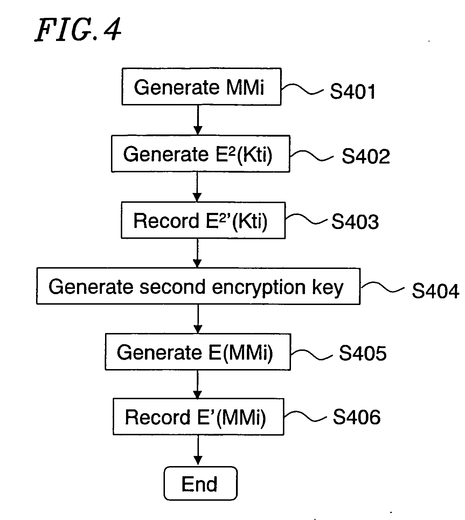

Figure **4** is a flowchart showing a procedure of converting the format of the information recording medium **101** from a non-move-compliant format to a move-compliant format using the information recording/reproduction apparatus **100**.

Hereinafter, the procedure of converting the format of the information recording medium **101** from a non-move-compliant format to a move-compliant format will be described step by step with reference to Figure **4**.

In step S401: the random number generator **118** generates a random number MMi and outputs it to the third encryption section **117** and the fourth encryption section **120**. The random number MMi may be assigned to each of a plurality of titles or may vary depending on time.

In step S402: the encrypted title key information E(Kti) , which has been reproduced in the first demodulation scheme and the first error correction decoding scheme, is also input to the third encryption section **117;** and the third encryption section **117** further encrypts the encrypted title key information E(Kti) using the random number MMi to generate doubly-encrypted title key information E²(Kti) which is in turn output to the first error correction code encoder **107.**

In step S403: the doubly-encrypted title key information E²(Kti) is recorded via the first error correction code encoder **107** and the first modulator **108** onto the information recording medium **101** in the first error correction code encoding scheme and the first modulation scheme. In this case, the doubly-encrypted title key information E²(Kti) is stored as coded doubly-encrypted title key information E²'(Kti) on the information recording medium **101**. The recording of data onto the information recording medium **101** is carried out using the recording head **109**.

In step S404: the second encryption key generator **119** generates a second encryption key and outputs it to the fourth encryption section **120.** Thereafter, the process goes to step S405.

In step S405: the fourth encryption section **120** encrypts the random number MMi based on the second encryption key to generate an encrypted random number E(MMi); and the encrypted random number E(MMi) is output to the second error correction code encoder **121.**

In step S406: the encrypted random number E(MMi) is recorded via the second error correction code encoder **121** and the second modulator **122** onto the information recording medium **101** in a second error correction code encoding scheme and a second modulation scheme. In this case, the encrypted random number E(MMi) is stored as coded encrypted random number E'(MMi) on the information recording medium **101**. The recording of data onto the information recording medium **101** is carried out using the recording head **109** . The second error correction code encoding scheme and the second modulation scheme are different from the first error correction code encoding scheme and the first modulation scheme, respectively. The second error correction code encoding scheme and the second modulation scheme are not generally open to the public.

In the embodiment of Figure **1**, the first encryption section **104** functions as "means for encrypting the title key information Kti using the first encryption key to generate encrypted title key information E(Kti)"; the second encryption section **106** functions as "means for encrypting a content using the title key information Kti to generate the encrypted content E(Content)"; the first error correction code encoder **107,** the first modulator **108,** and the recording head **109** function as "means for recording the encrypted title key information E(Kti) and the encrypted content E(Content) onto the information recording medium **101** in the first error correction code encoding scheme and the first modulation scheme" and "means for recording the doubly-encrypted title key information E²(Kti) onto the information recording medium **101** in the first error correction code encoding scheme and the first modulation scheme"; the reproduction head **112**, the first demodulator **113**, and the first error correction code decoder **114** function as "means for reproducing the coded encrypted title key information E'(Kti) and the coded encrypted content E'(Content) recorded in the information recording medium **101** in the first demodulation scheme and the first error correction decoding scheme corresponding to the first modulation scheme and the first error correction code encoding scheme, respectively"; the first decryption section **115** functions as "means for decrypting the encrypted title key information E(Kti) using the first encryption key to generate the title key information Kti"; the second decryption section **116** functions as "means for decrypting the encrypted content E(Content) using the title key information Kti to generate a content"; the third encryption section **117** functions as "means for further encrypting the encrypted title key information E(Kti) using the random number MMi to generate the doubly-encrypted title key information E²(Kti)"; the fourth encryption section **120** functions as "means for encrypting the random number MMi using the second encryption key to generate the encrypted random number E(MMi)"; and the second error correction code encoder **121**, the second modulator **122**, and the recording head **109** function as "means for recording the encrypted random number E(MMi) onto the information recording medium **101** in the second error correction code encoding scheme and the second modulation scheme different from the first error correction code encoding scheme and the first modulation scheme, respectively". However, the present invention is not limited to the information recording/reproduction apparatus **100** according to the embodiment of Figure **1**. The information recording/reproduction apparatus **100** may have any configuration as long as it has functions of the above-described means.

In the above-described embodiment, an information recording/reproduction apparatus comprising an information recording section and an information reproduction section therein is illustrated. The present invention is not limited to this. The information recording section and the information reproduction section may be provided in separate devices. When the information recording section and the information reproduction section are not integrated into the same apparatus, the first encryption key generator **105** is contained in both the information recording section and the information reproduction section. In addition, the information recording section and the information reproduction section have the same algorithm for generating the first encryption key. Further, the information recording section and the information reproduction section generate the first encryption key based on the same information recording medium-specific information.

Note that in the information recording/reproduction apparatus **100** of Embodiment 1 of the present invention, after the format of the information recording medium **101** is converted from the non-move-compliant format to the move-compliant format, the coded encrypted title key E' (Kti ) is preferably deleted from the information recording medium **101**. The reason will be described below.

A malicious user of an information recording medium makes a backup copy of all information stored on a first information recording medium onto a second information recording medium. After backing up the data, an encrypted content stored on the first information recording medium is moved onto a third information recording medium. Thereafter, the backup copy of all information stored on the second information recording medium is brought back to the first information recording medium. If the encrypted content, which has been brought back to the first information recording medium after a series of acts of the malicious user of the information recording medium, can be reproduced, the move operation made by the malicious information recording medium is not the proper move operation. The encrypted content, which should have been moved, is still present in the first information recording medium.

If the malicious user of the information recording medium makes the above-described series of acts on a non-move-compliant apparatus (e.g., PC, etc.), the encrypted random number E(MMi) cannot be backed up. This is because the non-move-compliant apparatus is not compliant with the second demodulation scheme and the second error correction code decoding scheme. However, the encrypted title key E(Kti) can be backed up. This is because the non-move-compliant apparatus is compliant with the first demodulation scheme and the first error correction code decoding scheme.

Therefore, the coded encrypted title key E' (Kti) is deleted from the information recording medium **101**.

The information recording/reproduction apparatus of the present invention generates the doubly-encrypted title key information E²(Kti) and the encrypted random number E(MMi) based on the encrypted title key information E(Kti) reproduced from the information recording medium **101**, the random number and the second encryption key, and records them onto the information recording medium **101**, thereby converting the format of the information recording medium from the non-move-compliant format to the move-compliant format. As a result, by converting or deleting a portion of data, the move-compliant recording/reproduction apparatus can produce a move-compliant format information recording medium which is originally in a non-move-compliant format but is converted to a move-compliant format.

### (Embodiment 2)

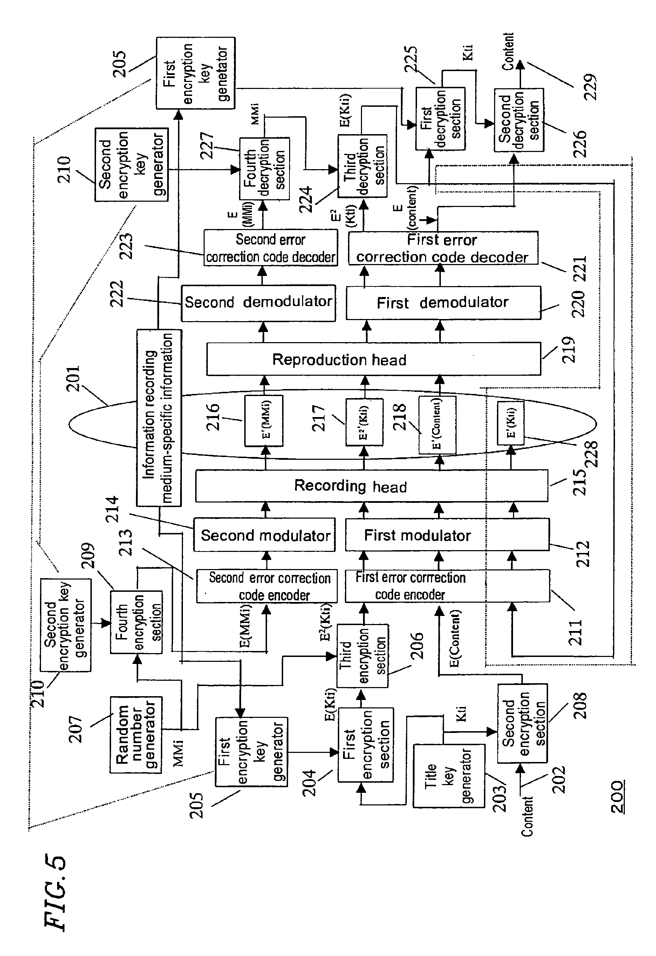

Figure **5** shows a configuration of an information recording/reproduction apparatus **200** according to Embodiment 2 of the present invention.

The information recording/reproduction apparatus **200** comprises the content input terminal **202** via which a content is input thereto, a title key generator **203** for generating a title key, a first encryption section **204**, a second encryption section **208** , and a third encryption section **206** for encrypting input data, a first encryption key generator **205** for generating a first encryption key, and a random number generator **207** for generating a random number.

The information recording/reproduction apparatus **200** further comprises a first error correction code encoder **211,** a first modulator **212 ,** and the recording head **215.** The first error correction code encoder **211,** the first modulator **212** , and the recording head **215** are used to record the input data onto an information recording medium **201** in a first error correction code encoding scheme and a first modulation scheme.

The information recording/reproduction apparatus **200** further comprises a second encryption key generator **210** for generating a second encryption key, a fourth encryption section **209** for encrypting input data, a second error correction code encoder **213**, and a second modulator **214**. The second error correction code encoder **213,** the second modulator **214**, and the recording head **215** are used to record the input data onto the information recording medium **201** in a second error correction code encoding scheme and a second modulation scheme.

The information recording/reproduction apparatus **200** uses the content input terminal **202**, the title key generator **203** , the f irst encryption section **204** , the second encryption section **208**, the third encryption section **206**, the first encryption key generator **205**, the random number generator **207**, the first error correction code encoder **211**, the first modulator **212**, the recording head **215**, the second encryption key generator **210**, the fourth encryption section **209**, the second error correction code encoder **213**, and the second modulator **214**, to encrypt a content externally input to the information recording/reproduction apparatus **200** and record the encrypted content onto the information recording medium **201**.

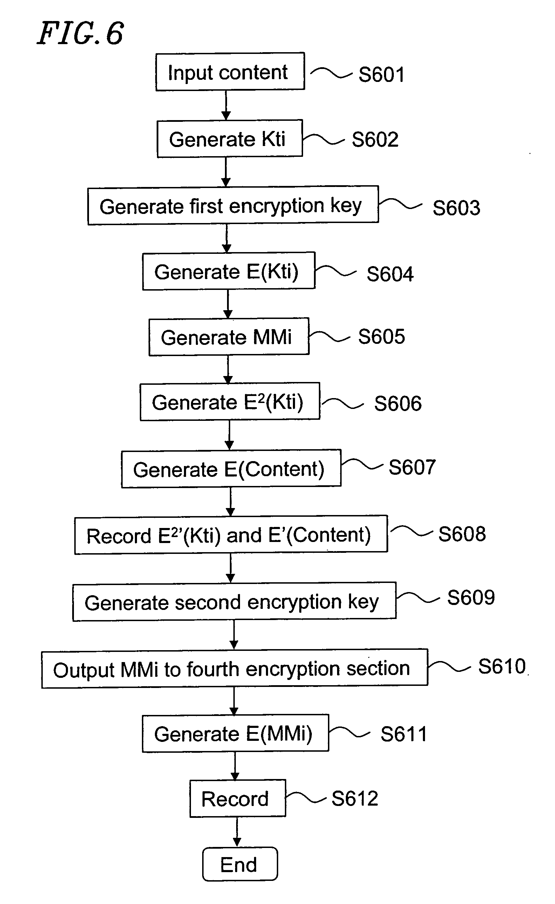

Figure **6** is a flowchart showing a procedure of recording a content onto the information recording medium **201** using the information recording/reproduction apparatus **200**.

Hereinafter, a procedure of recording a content onto the information recording medium **201** is described step by step with reference to Figure **6**. Note that the information recording medium **201** has an information recording medium-specific information for identifying the information recording medium **201.**

In step S601: a content is input into the information recording/reproduction apparatus **200** via the content input terminal **202** . An example of a content includes, but is not limited to, a digital music signal.

In step S602: the title key generator **203** generates title key information Kti and outputs it to the first encryption section **204** and the second encryption section **208**. The title key information Kti includes a title key and its accompanying information. The title key includes information relating to the title of a content. The information accompanying the title key includes move permission/prohibition information indicating whether move is permitted or not and whether copy is permitted or not.

After the title key information Kti is output to the first encryption section **204** and the second encryption section **208,** the process goes to step S603.

In step S603: the first encryption key generator **205** generates a first encryption key based on the information recording medium-specific information stored on the information recording medium **201** and outputs it to the first encryption section **204** . Thereafter, the process goes to step S604.

In step S604: the first encryption section **204** encrypts the title key information Kti using the first encryption key to generate encrypted title key information E(Kti); and the encrypted title key information E(Kti) is output to the third encryption section **206**. Thereafter, the process goes to step S605.

In step S605: the random number generator **207** generates a random number MMi and outputs it to the third encryption section **206**. The random number MMi may be as signed to each of a plurality of titles or may vary depending on time.

In step S606: the third encryption section **206** encrypts the encrypted title key information E(Kti) using the random number MMi to generate doubly-encrypted title key information E²(Kti). The doubly-encrypted title key information E²(Kti) is output to the first error correction code encoder **211**.

In step S607: the second encryption section 208 encrypts a content using the title key information Kti to generate the encrypted content E(Content). The encrypted content E(Content) is output to the first error correction code encoder **211**.

In step S608: the doubly-encrypted title key information E²(Kti) and the encrypted content E(Content) are recorded via the first error correction code encoder **211** and the first modulator **212** onto the information recording medium **201** in the first error correction code encoding scheme and the first modulation scheme. In this case, the doubly-encrypted title key information E²(Kti) and the encrypted content E(Content) are stored as coded doubly-encrypted title key information E²'(Kti) and coded encrypted content E'(Content) on the information recording medium **201**. The recording of data onto the information recording medium **201** is carried out using the recording head **215.**

In step S609: the second encryption key generator **210** generates the second encryption key and outputs it to the fourth encryption section **209.**

In step S610: the random number MMi generated by the random number generator **207** is also output to the fourth encryption section **209**.

In step S611: the fourth encryption section **209** encrypts the random number MMi using the second encryption key to generate an encrypted random number E(MMi). After the encrypted random number E(MMi) is output the second error correction code encoder **213,** the process goes to step S612.

In step S612 : the encrypted random number E(MMi) is recorded via the second error correction code encoder **213** and the second modulator **214** onto the information recording medium **201** in the second error correction code encoding scheme and the secondmodulation scheme. In this case, the encrypted random number E(MMi) is stored as coded encrypted random number E'(MMi) on the information recording medium **201.** The recording of data onto the information recording medium **201** is carried out using the recording head **215.** The second error correction code encoding scheme and the second modulation scheme are different from the first error correction code encoding scheme and the first modulation scheme, respectively. The second error correction code encoding scheme and the second modulation scheme are not made open to the public.

Referring back to Figure **5**, a configuration of the information recording/reproduction apparatus **200** will be described below.

The information recording/reproduction apparatus **200** further comprises a reproduction head **219**, the second demodulator **222** , and a second error correction code decoder **223**. The reproduction head **219**, the second demodulator **222**, and the second error correction code decoder **223** are used to reproduce data from the information recording medium **201** in a second demodulation scheme and a second error correction code decoding scheme.

The information recording/reproduction apparatus **200** further comprises the second encryption key generator **210** for generating a second encryption key and a fourth decryption section **227** for decrypting input data.

The information recording/reproduction apparatus **200** further comprises a first demodulator **220**, a first error correction code decoder **221**, and an first decryption section **225,** a second decryption section **226** and a third decryption section **224** for decrypting input data. The reproduction head **219**, the first demodulator **220,** and the first error correction code decoder **221** are used to reproduce data from the information recording medium **201** in a first demodulation scheme and a first error correction decoding scheme.

The information recording/reproduction apparatus **200** uses the reproduction head **219**, the second demodulator **222** , the second error correction code decoder **223** , the second encryption key generator **210**, the first demodulator **220**, the first error correction code decoder **221**, the first decryption section **225**, the second decryption section **226**, the third decryption section **224**, and the fourth decryption section **227** to decrypt an encrypted content stored on the information recording medium **201**.

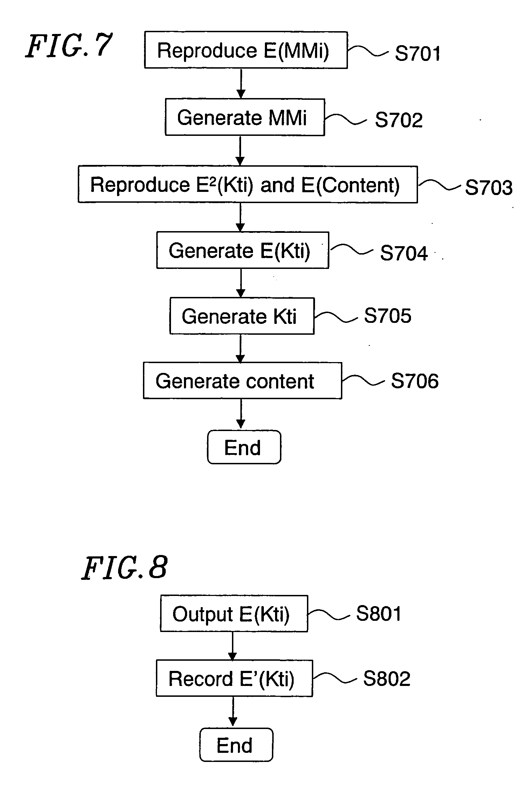

Figure **7** is a flowchart showing a procedure of reproducing an encrypted content from the information recording medium **201** using the information recording/reproduction apparatus **200.**

Hereinaf ter, a procedure of reproducing an encrypted content from the information recording medium **201** will be described step by step with reference to Figure 7 . Note that the information recording medium **201** stores the coded encrypted random number E'(MMi), the coded doubly-encrypted title key information E²'(Kti), and the coded encrypted content E'(Content).

In step S701: the coded encrypted random number E'(MMi) stored on the information recording medium is reproduced from the information recording medium **201** via the second demodulator **222** and the second error correction code decoder **223** in the second demodulation scheme and the second error correction code decoding scheme. The second demodulation scheme and the second error correction code decoding scheme correspond to the second modulation scheme and the second error correction code encoding scheme. The reproduction of data from the information recording medium **201** is carried out using the reproduction head **219**. The encrypted random number E(MMi) is output to the fourth decryption section **227**.

In step S702: the second encryption key generated by the second encryption key generator **210** is output to the fourth decryption section **227.** The fourth decryption section **227** decrypts the encrypted random number E(MMi) using the second encryption key to generate the random number MMi.

In step S703: the coded doubly-encrypted title key information E²'(Kti) and the coded encrypted content E'(Content) are reproduced from the information recording medium **201** via the first demodulator **220** and the first error correction code decoder **221** in the first demodulation scheme and the first error correction decoding scheme. The first demodulation scheme and the first error correction decoding scheme correspond to the first modulation scheme and the first error correction code encoding scheme, respectively. The reproduction of data from the information recording medium **201** is carried out using the reproduction head **219.** The doubly-encrypted title key information E²(Kti) is output to the third decryption section **224.** The encrypted content E(Content) is output to the second decryption section **226.**

In step S704: the third decryption section **224** decrypts the doubly-encrypted title key information E²(Kti) using the random number MMi generated by the fourth decryption section **227** to generate the encrypted title key information E(Kti). The encrypted title key information E(Kti) is output to the first decryption section **225.**

In step S705: the first decryption section **225** decrypts the encrypted title key information E(Kti) using the first encryption key to generate the title key information Kti. The title key information Kti is output to the second decryption section **226.**

In step S706: the second decryption section **226** decrypts the encrypted content E(Content) using the title key information Kti to generate a content.

The information recording/reproduction apparatus **200** generates encrypted title key information E(Kti) based on the doubly-encrypted title key information E²(Kti) reproduced from the information recording medium **201** and a random number MMi and records E(Kti) onto the information recording medium **201,** thereby converting the format of the information recording medium **201** from the move-compliant format to the non-move-compliant format.

Figure **8** is a flowchart showing a procedure of converting the format of the information recording medium **201** from the move-compliant format to the non-move-compliant format using the information recording/reproduction apparatus **200**.

Hereinafter, a procedure of converting the format of the information recording medium **201** from the move-compliant format to the non-move-compliant format is described step by step with reference to Figure 8.

In step S801: the encrypted title key information E (Kti) generated by the third decryption section **224** is output directly to the first error correction code encoder **211.**

In step S802: the encrypted title key information E (Kti) is recorded via the f irst error correction code encoder **211** and the first modulator **212** to the information recording medium **201** in the first error correction code encoding scheme and the first modulation scheme. In this case, the encrypted title key information E(Kti) is stored as coded encrypted title key information E' (Kti) on the information recording medium **201**. The recording of data onto the information recording medium **201** is carried out using the recording head **215**.

In the embodiment of Figure **5**, the first encryption section **204** functions as "means for encrypting the title key information Kti using the first encryption key to generate the encrypted title key information E(Kti)"; the third encryption section **206** functions as "means for further encrypting the encrypted title key information E(Kti) using the random number MMi to generate the doubly-encrypted title key information E²(Kti)"; the second encryption section **208** functions as "means for encrypting a content using the title key information Kti to generate the encrypted content E(Content)"; the fourth encryption section **209** functions as "means for encrypting the random number MMi using the second encryption key to generate the encrypted random number E(MMi)"; the first error correction code encoder **211,** the first modulator **212,** and the recording head **215** function as "means for recording the doubly-encrypted title key information E²(Kti) and the encrypted content E (Content) onto the information recording medium **201** in the first error correction code encoding scheme and the first modulation scheme" and "means for recording the encrypted title key information E(Kti) onto the information recording medium **201** in the first error correction code encoding scheme and the first modulation scheme"; the second error correction code encoder **213,** the second modulator **214,** and the recording head **215** function as "means for recording the encrypted random number E(MMi) onto the information recording medium **201** in the second error correction code encoding scheme and the second modulation scheme which are different from the first error correction code encoding scheme and the first modulation scheme, respectively"; the reproduction head **219**, the first demodulator **220**, and the first error correction code decoder **221** function as "means for reproducing the coded doubly-encrypted title key information E²'(Kti) and the coded encrypted content E' (Content) from the information recording medium **201** in the first demodulation scheme and the first error correction decoding scheme which correspond to the first modulation scheme and the first error correction code encoding scheme, respectively"; the reproduction head **219**, the second demodulator **222,** and the second error correction code decoder **223** function as "means for reproducing the coded encrypted random number E'(MMi) from the information recording medium **201** in the second demodulation scheme and the second error correction code decoding scheme which correspond to the second modulation scheme and the second error correction code encoding scheme, respectively"; the fourth decryption section **227** functions as "means for decrypting the encrypted random number E(MMi) using the second encryption key to generate the random number MMi"; the third decryption section **224** functions as "means for decrypting the doubly-encrypted title key information E²(Kti) using the random number MMi to generate the encrypted title key information E(Kti)"; the first decryption section **225** functions as "means for decrypting the encrypted title key information E(Kti) using the first encryption key to generate the title key information Kti"; and the second decryption section **226** functions as "means for decrypting the encrypted content E(Content) using the title key information Kti to generate a content" . However, the present invention is not limited to the information recording/reproduction apparatus **200** according to the embodiment of Figure **5**. The information recording/reproduction apparatus **200** may have any configuration as long as it has the above-described means.

Although in the above-described embodiment, an information recording/reproduction apparatus comprising an information recording section and an information reproduction section therein is illustrated, the information recording section and the information reproduction section may be provided in separate devices. The present invention is not limited to this. When the information recording section and the information reproduction section are not integrated into the same apparatus, the first encryption key generator **205** and the second encryption key generator **210** are contained in both the information recording section and the information reproduction section. In addition, the information recording section and the information reproduction section have the same algorithm for generating the first encryption key. Also, the information recording section and the information reproduction section have the same algorithm for generating the second encryption key. Further, the information recording section and the information reproduction section generate the first encryption key based on the same information recording medium-specific information.

Note that after the format of the information recording medium **201** is converted from the move-compliant format tothe non-move-compliantformat using the information recording/reproduction apparatus **200** of Embodiment 2 of the present invention, the coded doubly-encrypted title key information E²'(Kti) and the coded encrypted random number E'(MMi) are pref erably deleted f rom the information recording medium **201**.

The information recording/reproduction apparatus of the present invention generates the encrypted title key information E(Kti) based on the doubly-encrypted title key information E²(Kti) reproduced from an information recording medium and a random number and records it onto the information recording medium, converting the format of the information recording medium from the move-compliant format to the non-move-compliant format. As a result, by converting or deleting a portion of data, a non-move-compliant recording/reproduction apparatus can produce a non-move-compliant format information recording medium which is originally in a move-compliant format but is converted to a non-move-compliant format. In general, a move-compliant recording/reproduction apparatus can reproduce a non-move-compliant format information recording medium, but a non-move-compliant recording/reproduction apparatus cannot reproduce a move-compliant format information recording medium.

Note that it is not essential that the encrypted title key information E(Kti) generated by the third decryption section **224** is output directly into the first error correction code encoder **211**.

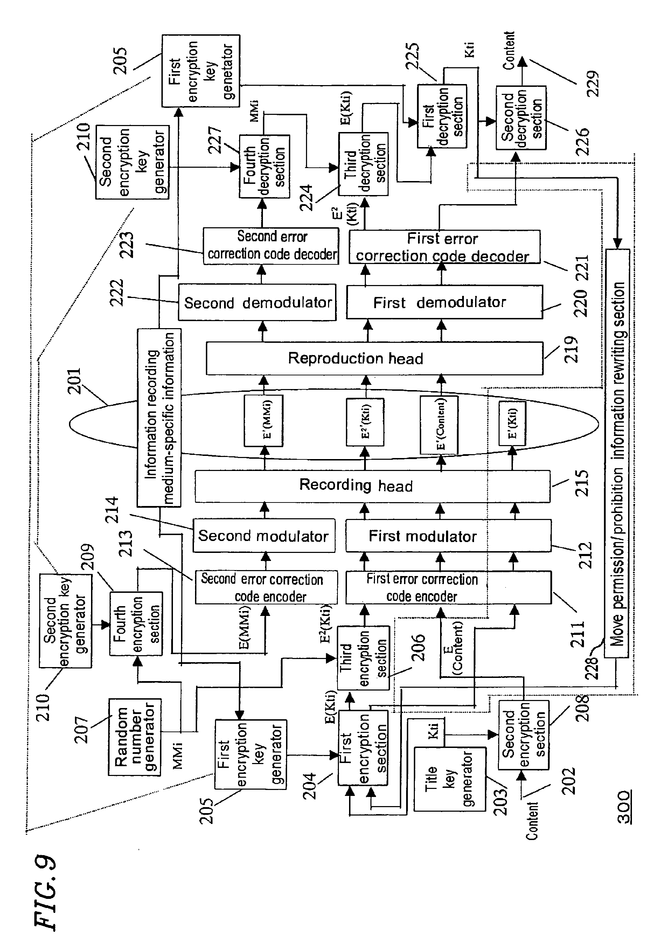

Figure 9 shows a configuration of an information recording/reproduction apparatus **300** according to another example of Embodiment 2 of the present invention.

The information recording/reproduction apparatus **300** comprises the same procedures (components) as those in the information recording/reproduction apparatus **200** except for (1) the encrypted title key information E(Kti) generated by the third decryption section **224** is decrypted by the first decryption section **225** to generate the title key information Kti, and the encrypted title key information E(Kti) generated by encrypting the title key information Kti is recorded onto the information recording medium **201**, and (2) a move permission/prohibition information rewriting section **228**.

The first decryption section **225** decrypts the encrypted title key information E(Kti) generated by the third decryption section **224** using the first encryption key to generate the title key information Kti. The title key information Kti is output to the move permission/prohibition information rewriting section **228**. The move permission/prohibition information rewriting section **228** rewrites move permission/prohibition information contained in the title key information Kti to information indicating move prohibition. After the move permission/prohibition information is rewritten to the information indicating move prohibition, the title key information Kti is output to the first encryption section **204**.

The first encryption section **204** encrypts the title key information Kti using the first encryption key to generate the encrypted title key information E(Kti).

The encrypted title key information E(Kti) is recorded via the first error correction code encoder **211** and the first modulator **212** onto the information recording medium **201** in the first error correction code encoding scheme and the first modulation scheme. In this case, the encrypted title key information E(Kti) is stored as coded encrypted title key information E' (Kti) on the information recording medium **201**. The recording of data onto the information recording medium **201** is carried out using the recording head **215**.

In format conversion, the encrypted title key information E(Kti) is decrypted into the title key information Kti, which is in turn recorded onto the information recording medium **201**. Therefore, before format conversion, the move permission/prohibition information rewriting section **228** rewrites the move permission/prohibition information contained in the title key information Kti into information indicating move prohibition, and thereafter, the title key information Kti is output to the first encryption section **204**.

### (Embodiment 3)

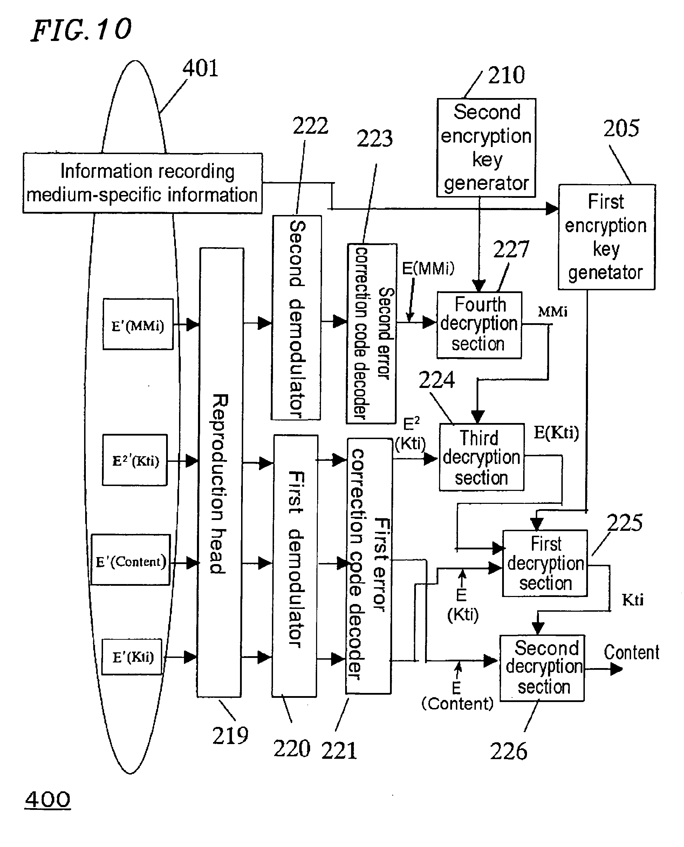

Figure **10** shows a configuration of an information reproduction apparatus **400** according to Embodiment 3 of the present invention.

The information reproduction apparatus **400** comprises a reproduction head **219**, a second demodulator **222**, and a second error correction code decoder **223**. The reproduction head **219**, the second demodulator **222**, and the second error correction code decoder **223** are used to reproduce data stored on an information recording medium **401** in a second demodulation scheme and a second error correction code decoding scheme.

The information reproduction apparatus **400** further comprises a second encryption key generator **210** for generating a second encryption key and a fourth decryption section **227** for decrypting input data.

The information reproduction apparatus **400** further comprises a first demodulator **220**, a first error correction code decoder **221**, and a first decryption section **225**, a second decryption section **226**, and a third decryption section **224** for decrypting input data. The reproduction head **219**, the first demodulator **220**, and the first error correction code decoder **221** are used to reproduce data stored on the information recording medium **401** in a first demodulation scheme and a first error correction decoding scheme.

In the information reproduction apparatus **400**, the reproduction head **219**, the second demodulator **222**, the second error correction code decoder **223**, the second encryption key generator **210**, the first demodulator **220**, the first error correction code decoder **221**, the first decryption section **225**, the second decryption section **226**, the third decryption section **224** , and the fourth decryption section **227** are used to decrypt an encrypted content stored on the information recording medium **401**.

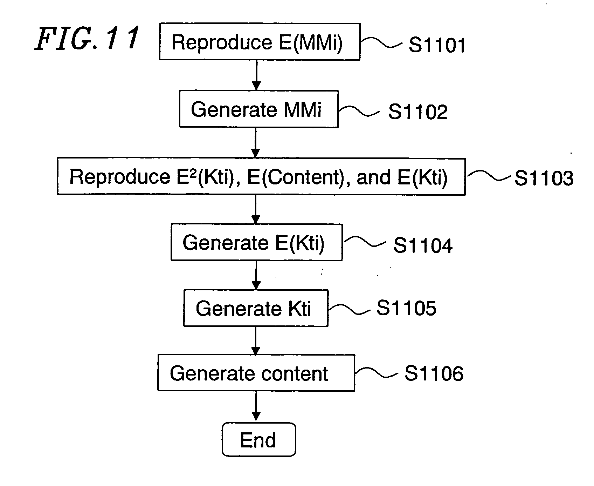

Figure **11** is a flowchart showing a procedure of reproducing an encrypted content from the information recording medium **401** using the information reproduction apparatus **400**.

Hereinafter, a procedure of reproducing an encrypted content from the information recording medium **401** will be described step by step with reference to Figure **11.** Note that the information recording medium **401** stores coded encrypted random number E'(MMi), coded doubly-encrypted title key information E²'(Kti), a coded encrypted content E'(Content), and coded encrypted title key information E'(Kti).

In step S1101: the coded encrypted random number E'(MMi) stored on the information recording medium **401** is reproduced via the second demodulator **222** and the second error correction code decoder **223** in the second demodulation scheme and the second error correction code decoding scheme. The second demodulation scheme and the second error correction code decoding scheme correspond to the second modulation scheme and the second error correction code encoding scheme, respectively. The reproduction of the information recording medium **401** is carried out using the reproduction head **219**. The encrypted random number E(MMi) is output to the fourth decryption section **227.**

In step S1102: the second encryption key generated from the second encryption key generator **210** is output to the fourth decryption section **227**. The fourth decryption section **227** decrypts the encrypted random number E(MMi) using the second encryption key to generate the random number MMi.

In step S1103: the coded doubly-encrypted title key information E²'(Kti), the coded encrypted content E' (Content), and the coded encrypted title key information E' (Kti) stored on the information recording medium **401** are reproduced via the first demodulator **220** and the first error correction code decoder **221** in the first demodulation scheme and the first error correction decoding scheme. The first demodulation scheme and the first error correction decoding scheme correspond to the first modulation scheme and the first error correction code encoding scheme, respectively. The reproduction of data from the information recording medium **401** is carried out using the reproduction head **219.** The doubly-encrypted title key information E²(Kti) is output to the third decryption section **224.** The encrypted content E(Content) is output to the second decryption section **226.** The encrypted title key information E(Kti) is output to the first decryption section **225.**

In step S1104: the third decryption section **224** decrypts the doubly-encrypted title key information E²(Kti) using the random number MMi generated by the fourth decryption section **227** to generate the encrypted title key information E(Kti). The encrypted title key information E(Kti) is output to the first decryption section **225**.

In step S1105: the first decryption section **225** decrypts the encrypted title key information E(Kti) using the first encryption key to generate the title key information Kti. The title key information Kti is output to the second decryption section **226**.

In step S1106: the second decryption section **226** decrypts the encrypted content E(Content) using the title key information Kti to generate a content.

The information recording/reproduction apparatus of the present invention generates doubly-encrypted title key information E²(Kti) and an encrypted random number E(MMi) based on encrypted title key information E(Kti) reproduced from an information recording medium, a random number, and a second encryption key and records them onto the information recording medium, thereby converting the format of the information recording medium from a non-move-compliant format to amove-compliant format . As a result, by converting or deleting a portion of data, the move-compliant recording/reproduction apparatus can produce a move-compliant format information recording medium which is originally in a non-move-compliant format but is converted to a move-compliant format.

Further, the information recording/reproduction apparatus of the present invention encrypted title key information E(Kti) based on doubly-encrypted title key information E²(Kti) reproduced from an information recording medium and a random number and records them onto the information recording medium, thereby converting the format of the information recording medium from the move-compliant format to the non-move-compliant format. As a result, by converting or deleting a portion of data, a non-move-compliant recording/reproduction apparatus can produce a non-move-compliant format information recording medium which is originally in a move-compliant format but is converted to a non-move-compliant format.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A format conversion apparatus for converting a format of an information recording medium, wherein the information recording medium stores coded encrypted title key information E' (Kti) , wherein the coded encrypted title key information E' (Kti) has been obtainedby encrypting title key information Kti using a first encryption key and recording the encrypted title key information E(Kti) onto the information recording medium in a first error correction code encoding scheme and a first modulation scheme,
the format conversion apparatus comprising:
a section for reproducing the coded encrypted title key information E'(Kti) stored on the information recording medium in a first demodulation scheme and a first error correction decoding scheme corresponding to the first modulation scheme and the first error correction code encoding scheme to generate the encrypted title key information E(Kti);
a section for encrypting the encrypted title key information E ( Kti ) using a random number MMi to generate doubly-encrypted title key information E²(Kti);
a section for encrypting the random number MMi using a second encryption key to generate an encrypted random number E(MMi);
a section for recording the doubly-encrypted title key information E²(Kti) onto the information recording medium in the first error correction code encoding scheme and the first modulation scheme as coded doubly-encrypted title key information E²'(Kti); and
a section for recording the encrypted random number E(MMi) onto the information recording medium in a second error correction code encoding scheme and a second modulation scheme different from the first error correction code encoding scheme and the first modulation scheme, respectively, as coded encrypted random number E'(MMi).

2. A format conversion apparatus for converting a format of an information recording medium, wherein the information recording medium stores coded doubly-encrypted title key information E²'(Kti) and coded encrypted random number E'(MMi), wherein the coded doubly-encrypted title key information E²'(Kti) has been obtained by encrypting encrypted title key information E(Kti) using a random number MMi and recording the doubly-encrypted title key information E²(Kti) onto the information recording medium in a f irst error correction code encoding scheme and a first modulation scheme; and the coded encrypted random number E'(MMi) has been obtained by encrypting the random number MMi using a second encryption key and recording the encrypted random number E(MMi) onto the information recording medium in a second error correction code encoding scheme and a second modulation scheme different from the first error correction code encoding scheme and the first modulation scheme, respectively,
the format conversion apparatus comprising:
a section for reproducing the coded doubly-encrypted title key information E²'(Kti) stored on the information recording medium in a first demodulation scheme and a first error correction decoding scheme corresponding to the first modulation scheme and the first error correction code encoding scheme, respectively, as the doubly-encrypted title key information E²(Kti);
a section for reproducing the coded encrypted random number E'(MMi) stored on the information recording medium in a second demodulation scheme and a second error correction code decoding scheme corresponding to the second modulation scheme and the second error correction code encoding scheme to generate the encrypted random number E(MMi);
a section for decrypting the encrypted random number E (MMi) using a second encryption key to generate a random number MMi:
a section for decrypting the doubly-encrypted title key information E²(Kti) using the random number MMi to generate the encrypted title key information E(Kti); and
a section for recording the encrypted title key information E (Kti) onto the information recording medium in the first error correction code encoding scheme and the first modulation scheme as the coded encrypted title key information E'(Kti).

3. A format conversion apparatus according to claim 2, further comprising:
a section for decrypting the encrypted title key information E(Kti) generated by the section for generating the encrypted title key information E(Kti) using the first encryption key to generate the title key information Kti; and
a section for encrypting the title key information Kti using the first encryption key to generate the encrypted title key information E(Kti).

4. A format conversion apparatus according to claim 1, wherein after the doubly-encrypted title key information E²(Kti) and the encrypted random number E(MMi) are generated and are recorded onto the information recording medium, the coded encrypted title key information E'(Kti) is deleted from the information recording medium.

5. A format conversion apparatus according to claim 2, wherein after the encrypted title key information E(Kti) is generated and is recorded onto the information recording medium, the coded doubly-encrypted title key information E²'(Kti) and the coded encrypted random number E'(MMi) are deleted from the information recording medium.

6. A format conversion apparatus according to claim 2, wherein after the encrypted title key information E(Kti) is generated and is recorded onto the information recording medium, the coded encrypted random number E'(MMi) is deleted from the information recording medium.

7. A format conversion apparatus according to claim 2, wherein the title key information Kti includes permission/prohibition information indicating whether a move operation of the content stored on the information recording medium is permitted or not .

8. A format conversion apparatus according to claim 3, wherein:
the title key information Kti includes permission/prohibition information indicating whether or not a move operation is permitted for a content stored on the information recording medium; and
the format conversion apparatus further comprises a section for rewriting the permission/prohibition information to indicate move prohibition.

9. An information recording/reproduction apparatus for recording a content onto an information recording medium and reproducing the content stored on an information recording medium, comprising:
a section for encrypting title key information Kti using a first encryption key to generate encrypted title key information E(Kti);
a section for encrypting the content using the title key information Kti to generate an encrypted content E(Content);
a section for recording the encrypted title key information E(Kti) and the encrypted content E (Content) onto the information recording medium in a first error correction code encoding scheme and a first modulation scheme as coded encrypted title key information E' (Kti) and coded encrypted content E'(Content);
a section for reproducing the coded encrypted title key information E'(Kti) and the coded encrypted content E'(Content) stored on the information recording medium in a first demodulation scheme and a first error correction decoding scheme corresponding to the first modulation scheme and the first error correction code encoding scheme to generate the encrypted title key information E(Kti) and the encrypted content E(Content);
a section for decrypting the encrypted title key information E(Kti) using the first encryption key to generate the title key information Kti;
a section for decrypting the encrypted content E(Content) using the title key information Kti to generate the content;
a section for encrypting the encrypted title key information E(Kti) using a random number MMi to generate doubly-encrypted title key information E²(Kti);
a section for encrypting the random number MMi using a second encryption key to generate an encrypted random number E(MMi);
a section for recording the doubly-encrypted title key information E²(Kti) onto the information recording medium in a first error correction code encoding scheme and a first modulation scheme as coded doubly-encrypted title key information E²'(Kti); and
a section for recording the encrypted random number E(MMi) onto the information recording medium in a second error correction code encoding scheme and a second modulation scheme different from the first error correction code encodingscheme and thefirst modulationscheme,respectively, as coded encrypted random number E'(MMi).

10. An information recording/reproduction apparatus for recording a content onto an information recording medium and reproducing the content stored on the information recording medium, comprising:
a section for encrypting title key information Kti using a first encryption key to generate encrypted title key information E(Kti);
a section for encrypting the encrypted title key information E(Kti) using a random number MMi to generate doubly-encrypted title key information E²(Kti);
a section for encrypting the content using the title key information Kti to generate an encrypted content E(Content);
a section for encrypting the random number MMi using a second encryption key to generate encrypted random number E(MMi);
a section for recording the doubly-encrypted title key information E²(Kti) and the encrypted content E(Content) onto the information recording medium in a first error correction code encoding scheme and a f irst modulation scheme as coded doubly-encrypted title key information E²'(Kti) and coded encrypted content E'(Content);
a section for recording the encrypted random number E(MMi) onto the information recording medium in a second error correction code encoding scheme and a second modulation scheme different from the first error correction code encoding scheme and the first modulation scheme, respectively, as coded encrypted random number E'(MMi);
a section for reproducing the coded doubly-encrypted title key information E²'(Kti) and the coded encrypted content E'(Content) stored on the information recording medium in a first demodulation scheme and a first error correction decoding scheme corresponding to the first modulation scheme and the first error correction code encoding scheme, respectively, to generate the doubly-encrypted title key information E²(Kti) and the encrypted content E(Content);
a section for reproducing the coded encrypted random number E'(MMi) stored on the information recording medium in a second demodulation scheme and a second error correction code decoding scheme corresponding the second modulation scheme and the second error correction code encoding scheme, respectively, to generate the encrypted random number E(MMi);
a section for decrypting the encrypted random number E(MMi) using the second encryption key to generate the random number MMi;
a section for decrypting the doubly-encrypted title key information E²(Kti) using the random number MMi to generate the encrypted title key information E(Kti);
a section for decrypting the encrypted title key information E(Kti) using the first encryption key to generate the title key information Kti;
a section for decrypting the encrypted content E(Content) using the title key information Kti to generate the content; and
a section for recording the encrypted title key information E(Kti) onto the information recording medium in the first error correction code encoding scheme and the first modulation scheme as the coded encrypted title key information E'(Kti).

11. An information recording/reproduction apparatus according to claim 10, further comprising:
a section for decrypting the encrypted title key information E(Kti) generated by the section for generating the encrypted title key information E(Kti) using the first encryption key to generate the title key information Kti; and
a section for encrypting the title key information Kti using the first encryption key to generate the encrypted title key information E(Kti).

12. An information reproduction apparatus for reproducing a content stored on an information recording medium, wherein the information recording medium stores coded encrypted title key information E'(Kti), coded doubly-encrypted title key information E²'(Kti), a coded encrypted random number E'(MMi), and a coded encrypted content E'(Content),
wherein the coded encrypted title key information E' (Kti) stored on the information recording medium has been obtained by encrypting title key information Kti using a first encryption key to generate the encrypted title key information E(Kti) and recording the encrypted title key information E(Kti) onto the information recording medium in a first error correction code encoding scheme and a first modulation scheme,
wherein the coded doubly-encrypted title key information E²'(Kti) stored on the information recording medium has been obtained by encrypting the encrypted title key information E(Kti) using a random number MMi to generate the doubly-encrypted title key information E²(Kti) and recording the doubly-encrypted title key information E²(Kti) onto the information recording medium in the first error correction code encoding scheme and the first modulation scheme,
wherein the coded encrypted random number E'(MMi) stored on the information recording medium has been obtained by encrypting the random number MMi using a second encryption key to generate the encrypted random number E(MMi) and recording the encrypted random number E(MMi) onto the information recording medium in a second error correction code encoding scheme and a second modulation scheme different from the first error correction code encoding scheme and the first modulation scheme,
wherein the coded encrypted content E'(Content) stored on the information recording medium has been obtained by encrypting the content using the title key information Kti to generate the encrypted content E(Content) and recording the encrypted content E(Content) onto the information recording medium in the first error correction code encoding scheme and the first modulation scheme,
the information reproduction apparatus comprising:
a section for reproducing the coded doubly-encrypted title key information E²'(Kti), the coded encrypted title key information E'(Kti), and the coded encrypted content E'(Content) stored on the information recording medium in a first demodulation scheme and a first error correction decoding scheme corresponding to the first modulation scheme and the first error correction code encoding scheme, respectively;
a section for reproducing the coded encrypted random number E'(MMi) stored on the information recording medium in a second demodulation scheme and a second error correction code decoding scheme corresponding to the second modulation scheme and the second error correction code encoding scheme, respectively;
a section for decrypting the encrypted random number E(MMi) using the second encryption key to generate the random number MMi;
a section for decrypting the doubly-encrypted title key information E²(Kti) using the random number MMi to generate the encrypted title key information E(Kti);
a section for decrypting the encrypted title key information E(Kti) using the first encryption key to generate the title key information Kti; and
a section for decrypting the encrypted content E(Content) using the title key information Kti to generate the content.

13. A format conversion method for converting a format of an information recording medium, wherein the information recording medium stores coded encrypted title key information E'(Kti), wherein the coded encrypted title key information E'(Kti) has been obtained by encrypting title key information Kti using a first encryption key and recording the encrypted title key information E(Kti) onto the information recording medium in a first error correction code encoding scheme and a first modulation scheme,
the format conversion method comprising the steps of:
(a) reproducing the coded encrypted title key information E' (Kti) stored on the information recording medium in a first demodulation scheme and a first error correction decoding scheme corresponding to the first modulation scheme and the first error correction code encoding scheme to generate the encrypted title key information E(Kti);
(b) encrypting the encrypted title key information E(Kti) using a random number MMi to generate doubly-encrypted title key information E²(Kti);
(c) encrypting the random number MMi using a second encryption key to generate an encrypted random number E(MMi);
(d) recording the doubly-encrypted title key information E²(Kti) onto the information recording medium in the first error correction code encoding scheme and the first modulation scheme as coded doubly-encrypted title key information E²'(Kti); and
(e) recording the encrypted random number E(MMi) onto the information recording medium in a second error correction code encoding scheme and a second modulation scheme different from the first error correction code encodingscheme and thefirst modulationscheme,respectively, as coded encrypted random number E'(MMi).

14. A format conversion method for converting a format of an information recording medium, wherein the information recording medium stores coded doubly-encrypted title key information E²'(Kti) and coded encrypted random number E'(MMi), wherein the coded doubly-encrypted title key information E²'(Kti) has been obtained by encrypting encrypted title key information E(Kti) using a random number MMi and recording the doubly-encrypted title key information E²(Kti) onto the information recording medium in a first error correction code encoding scheme and a first modulation scheme; and the coded encrypted random number E'(MMi) has been obtained by encrypting the random number MMi using a second encryption key and recording the encrypted random number E(MMi) onto the information recording medium in a second error correction code encoding scheme and a second modulation scheme different from the first error correction code encoding scheme and the first modulation scheme, respectively,
the format conversion method comprising the steps of:
(a) reproducing the coded doubly-encrypted title key information E²'(Kti) stored on the information recording medium in a first demodulation scheme and a first error correction decoding scheme corresponding to the first modulation scheme and the first error correction code encodingscheme,respectively,as the doubly-encrypted title key information E²(Kti);
(b) reproducing the coded encrypted random number E'(MMi) stored on the information recording medium in a second demodulation scheme and a second error correction code decoding scheme corresponding to the second modulation scheme and the second error correction code encoding scheme to generate the encrypted random number E(MMi);
(c) decrypting the encrypted random number E(MMi) using a second encryption key to generate a random number MMi;
(d) decrypting the doubly-encrypted title key information E²(Kti) using the random number MMi to generate the encrypted title key information E(Kti); and
(e) recording the encrypted title key information E(Kti) onto the information recording medium in the first error correction code encoding scheme and the first modulation scheme as the coded encrypted title key information E'(Kti).

15. Aformat conversion method according to claim 14, further comprising:
decrypting the encrypted title key information E(Kti) generated by the step of generating the encrypted title key information E(Kti) using the first encryption key to generate the title key information Kti; and
encrypting the title key information Kti using the first encryption key to generate the encrypted title key information E(Kti).

16. An information recording/reproduction method for recording a content onto an information recording medium and reproducing the content stored on an information recording medium, comprising the steps of:
(a) encrypting title key information Kti using a first encryption key to generate encrypted title key information E(Kti);
(b) encrypting the content using the title key information Kti to generate an encrypted content E(Content);
(c) recording the encrypted title key information E(Kti) and the encrypted content E(Content) onto the information recording medium in a first error correction code encoding scheme and a first modulation scheme as coded encrypted title key information E' (Kti) and coded encrypted content E'(Content);
(d) reproducing the coded encrypted title key information E'(Kti) and the coded encrypted content E'(Content) stored on the information recording medium in a first demodulation scheme and a first error correction decoding scheme corresponding to the first modulation scheme and the first error correction code encoding scheme to generate the encrypted title key information E(Kti) and the encrypted content E(Content);
(e) decrypting the encrypted title key information E(Kti) using the first encryption key to generate the title key information Kti;
(f) decrypting the encrypted content E(Content) using the title key information Kti to generate the content;
(g) encrypting the encrypted title key information E ( Kti ) using a random number MMi to generate doubly-encrypted title key information E²(Kti);
(h) encrypting the random number MMi using a second encryption key to generate an encrypted random number E (MMi);
(i) recording the doubly-encrypted title key information E²(Kti) onto the information recording medium in a first error correction code encoding scheme and a first modulation scheme as coded doubly-encrypted title key information E²'(Kti); and
(j) recording the encrypted random number E(MMi) onto the information recording medium in a second error correction code encoding scheme and a second modulation scheme different from the first error correction code encoding scheme and the first modulation scheme, respectively, as coded encrypted random number E'(MMi).

17. An information recording/reproduction method for recording a content onto an information recording medium and reproducing the content stored on the information recording medium, comprising the steps of:
(a) encrypting title key information Kti using a first encryption key to generate encrypted title key information E(Kti);
(b) encrypting the encrypted title key information E(Kti) using a random number MMi to generate doubly-encrypted title key information E²(Kti);
(c) encrypting the content using the title key information Kti to generate an encrypted content E(Content);
(d) encrypting the random number MMi using a second encryption key to generate encrypted random number E(MMi);
(e) recording the doubly-encrypted title key information E²(Kti) and the encrypted content E(Content) onto the information recording medium in a first error correction code encoding scheme and a first modulation scheme as coded doubly-encrypted title key information E²'(Kti) and coded encrypted content E'(Content);
(f) recording the encrypted random number E(MMi) onto the information recording medium in a second error correction code encoding scheme and a second modulation scheme different from the first error correction code encoding scheme and the first modulation scheme, respectively, as coded encrypted random number E'(MMi);
(g) reproducing the coded doubly-encrypted title key information E²'(Kti) and the coded encrypted content E'(Content) stored on the information recording medium in a first demodulation scheme and a first error correction decoding scheme corresponding to the first modulation scheme and the first error correction code encoding scheme, respectively, as the doubly-encrypted title key information E²(Kti) and the encrypted content E(Content);
(h) reproducing the coded encrypted random number E'(MMi) stored on the information recording medium in a second demodulation scheme and a second error correction code decoding scheme corresponding the second modulation scheme and the second error correction code encoding scheme, respectively, to generate the encrypted random number E (MMi) ;
(i) decrypting the encrypted random number E(MMi) using the second encryption key to generate the random number MMi;
(j) decrypting the doubly-encrypted title key information E²(Kti) using the random number MMi to generate the encrypted title key information E(Kti);
(k) decrypting the encrypted title key information E(Kti) using the first encryption key to generate the title key information Kti;
(1) decrypting the encrypted content E(Content) using the title key information Kti to generate the content; and
(m) recording the encrypted title key information E(Kti) onto the information recording medium in the first error correction code encoding scheme and the first modulation scheme as the coded encrypted title key information E'(Kti).

18. An information recording/reproduction method according to claim 17, further comprising:
decrypting the encrypted title key information E(Kti) generated by the step of generating the encrypted title key information E(Kti) using the first encryption key to generate the title key information Kti; and
encrypting the title key information Kti using the first encryption key to generate the encrypted title key information E(Kti).

19. An information reproduction method for reproducing a content stored on an information recording medium, wherein the information recording medium stores coded encrypted title key information E'(Kti), coded doubly-encrypted title key information E²'(Kti), a coded encrypted random number E'(MMi), and a coded encrypted content E'(Content),
wherein the coded encrypted title key information E' (Kti) stored on the information recording medium has been obtained by encrypting title key information Kti using a first encryption key to generate the encrypted title key information E(Kti) and recording the encrypted title key information E(Kti) onto the information recording medium in a first error correction code encoding scheme and a first modulation scheme,
wherein the coded doubly-encrypted title key information E²'(Kti) stored on the information recording medium has been obtained by encrypting the encrypted title key information E(Kti) using a random number MMi to generate the doubly-encrypted title key information E²(Kti) and recording the doubly-encrypted title key information E²(Kti) onto the information recording medium in the first error correction code encoding scheme and the first modulation scheme,
wherein the coded encrypted random number E'(MMi) stored on the information recording medium has been obtained by encrypting the random number MMi using a second encryption key to generate the encrypted random number E(MMi) and recording the encrypted random number E(MMi) onto the information recording medium in a second error correction code encoding scheme and a second modulation scheme different from the first error correction code encoding scheme and the first modulation scheme,
wherein the coded encrypted content E'(Content) stored on the information recording medium has been obtained by encrypting the content using the title key information Kti to generate the encrypted content E(Content) and recording the encrypted content E(Content) onto the information recording medium in the first error correction code encoding scheme and the first modulation scheme,
the information reproduction method comprising the steps of:
(a) reproducing the coded doubly-encrypted title key information E²'(Kti), the coded encrypted title key information E'(Kti), and the coded encrypted content E'(Content) stored on the information recording medium in a first demodulation scheme and a first error correction decoding scheme corresponding to the first modulation scheme and the first error correction code encoding scheme, respectively, as the doubly-encrypted title key information E²(Kti), the encrypted title key information E ( Kti ) , and the coded encrypted content E(Content);
(b) reproducing the coded encrypted random number E' (MMi) stored on the information recording medium in a second demodulation scheme and a second error correction code decoding scheme corresponding to the secondmodulation scheme and the second error correction code encoding scheme, respectively, as the encrypted random number E(MMi);
(c) decrypting the encrypted random number E(MMi) using the second encryption key to generate the random number MMi;
(d) decrypting the doubly-encrypted title key information E²(Kti) using the random number MMi to generate the encrypted title key information E(Kti);
(e) decrypting the encrypted title key information E(Kti) using the first encryption key to generate the title key information Kti; and
(f) decrypting the encrypted content E(Content) using the title key information Kti to generate the content.
